# DEMANDE DE BREVET EUROPEEN

(11) **EP 1 207 579 A2**
(43) Date de publication de la demande: **22.05.2002**
(21) Numéro de dépôt: 01402872.4
(22) Date de dépôt: 08.11.2001
(51) Int. Cl.: H01M 8/04

(54) **Procédé et dispositif de sécurité pour le démarrage d'une pile à combustible**

(30) Priorité: 14.11.2000 FR 0014656
(71) Demandeur: L'air Liquide, S.A. à Directoire et Conseil de Surveillance pour l'Etude et l'Exploitation des Procédés Georges Claude, 75321 Paris Cedex 07 (FR)
(72) Inventeur: Charlat, Pierre, 38250 Lans en Vercors (FR)
(74) Mandataire: Le Moenner, Gabriel

(57) **Abrégé**

- Le dispositif comprend :
   - deux vannes (**17** et **18**) montées sur l'entrée et la sortie du circuit hydrogène du compartiment anode
   - et un circuit de pontage contrôlé (**24**) entre l'entrée du circuit hydrogène au compartiment anode et, soit le compartiment cathode, soit le milieu ambiant.
- Application aux piles à combustible air-hydrogène.

## Description

L'invention concerne le domaine des piles à combustible et elle vise plus spécialement, le problème de la sécurité devant être respectée lors des phases de démarrage ou d'arrêt d'une pile faisant intervenir, à titre de fluide gazeux de l'hydrogène et de l'air.

Dans les piles du type ci-dessus, on conçoit qu'il convient de maintenir et de stabiliser des conditions d'alimentation des circuits anode et cathode, de telle manière qu'en aucun cas, il ne puisse se produire entre l'hydrogène et l'oxygène de l'air un mélange explosif à même d'être la cause d'incidents, voire d'accidents graves.

Or, un tel risque peut être considéré comme potentiel lors de l'opération de démarrage ou de mise en service lorsque le circuit d'alimentation en hydrogène du ou des compartiments anode se trouve, pour des raisons d'utilisation ou de non-utilisation antérieures, pour partie au moins, rempli d'air.

Tel est aussi le cas lors de l'arrêt d'une pile à combustible, étant donné que la chute de pression qui intervient dans le ou les compartiments anode par la consommation de l'hydrogène, le refroidissement qui s'y installe et la condensation de l'eau, peuvent être la cause d'entrée intempestive d'air susceptible de faire naître avec l'hydrogène résiduel un mélange explosif.

Ces deux éventualités sont prises en considération et font généralement intervenir des étapes d'inertage du ou des compartiments anode en procédant à l'injection dans ce ou ces compartiments d'un gaz neutre qu'il convient de pouvoir stocker et rendre disponible à volonté.

L'installation d'asservissement d'une pile à combustible s'en trouve ainsi plus complexe, plus onéreuse et plus exigente de vérification, de contrôle et d'entretien.

La prise en considération de ces obligations conduit objectivement à considérer qu'il conviendrait de pouvoir surmonter l'inconvénient ci-dessus tout en répondant positivement au problème de maintien de sécurité, en allégeant les moyens techniques nécessaires pour procéder à l'inertage du ou des compartiments anode.

C'est justement l'objet de l'invention que de proposer un nouveau procédé et un nouveau dispositif mettant à contribution l'installation même de la pile à combustible pour qu'elle puisse assurer, à partir de moyens techniques, simples, robustes, fiables et peu onéreux, un auto-inertage du compartiment anode du ou de ses éléments ou cellules à partir d'un processus de conduite non compliqué pouvant être mis en oeuvre par un personnel même non spécialement qualifié.

Pour atteindre l'objectif ci-dessus, le procédé de l'invention est caractérisé en ce que pour assurer le démarrage d'une pile à combustible,
- on ouvre progressivement le circuit hydrogène du ou des compartiments anode pour faire circuler l'air éventuellement inclus audit compartiment au contact du catalyseur de l'anode et produire la formation d'eau et la constitution d'un mélange gazeux neutre
- on mesure simultanément la pression dudit mélange gazeux neutre et on assure l'ouverture complète du circuit hydrogène après un temps prédéterminé,
- on stabilise ensuite dans le compartiment anode la pression nominale d'hydrogène,
- puis on ouvre le circuit d'alimentation en air du compartiment cathode afin d'établir des conditions de fonctionnement stabilisées.

L'invention a encore pour objet un dispositif conçu pour la mise en oeuvre d'un procédé tel que ci-dessus, et adapté à la sécurité pour le démarrage d'une pile à combustible composée d'au moins un élément comprenant un compartiment anode et un compartiment cathode raccordés, pour l'anode, à un circuit de circulation d'hydrogène et, pour la cathode, à un circuit de circulation d'air, ce dispositif comprenant :
- deux vannes disposées respectivement dans l'entrée et la sortie du circuit hydrogène du compartiment anode,
- au moins la vanne disposée dans l'entrée du circuit hydrogène étant à commande progressive.

Diverses autres caractéristiques ressortent de la description faite ci-dessus en référence aux dessins annexés qui montrent, à titre d'exemples non limitatifs, des formes de réalisation de l'objet de l'invention.

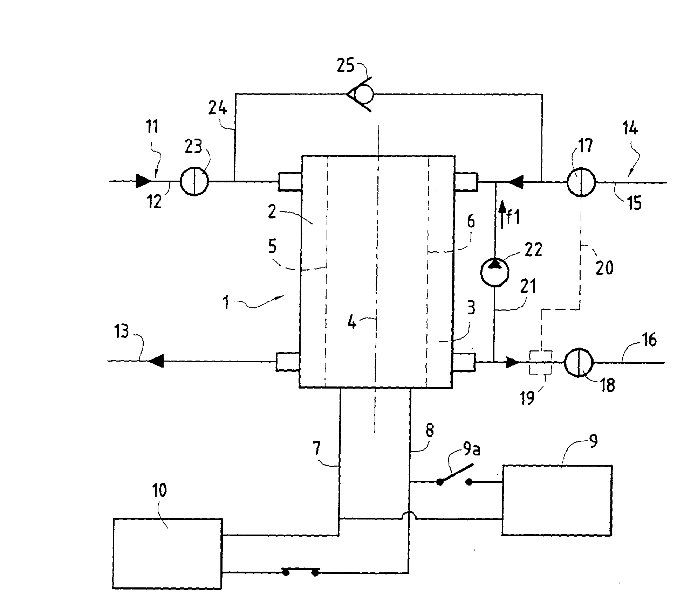

La **figure unique** est un schéma représentant les moyens techniques réunis pour la mise en oeuvre de l'objet de l'invention.

Selon cette figure unique, il apparaît que l'objet de l'invention est d'assurer la sécurité pour le démarrage et l'arrêt d'une pile à combustible **1** qui est représentée, à titre d'exemple, sous la forme d'un seul élément constitutif ou cellule comprenant, de façon classique, un compartiment cathode **2** et un compartiment anode **3** qui sont séparés par une membrane **4.** Les compartiments **2** et **3** contiennent, respectivement, une cathode **5** et une anode **6** qui sont associées chacune à un catalyseur présentant la caractéristique de permettre la réaction de fonctionnement en présence d'eau liquide.

De manière classique, les électrodes **5** et **6** sont pourvues de deux bornes **7** et **8** entre lesquelles, par le fonctionnement de la pile à combustible, apparaît une différence de potentiel qui est prélevée par un circuit de charge ou de consommation, tel que **9** et/ou **10.**

De manière conventionnelle, le compartiment **2** est associé à un circuit **11** d'alimentation en comburant préférentiellement en air, un tel circuit comportant une branche d'entrée **12** et une branche de sortie **13.** De même, le compartiment anode **3** est associé à un circuit **14** d'amenée d'hydrogène, un tel circuit comprenant une branche d'entrée **15** et une branche de sortie **16.**

Il va de soi que la pile, telle que décrite ci-dessus, pourrait être structurellement organisée différemment, par exemple à partir d'une batterie d'éléments **1** dont les différents compartiments **2** et **3** seraient alors raccordés de semblable manière, respectivement aux circuits **11** et **14.**

Pour mettre en oeuvre le procédé selon l'invention, il est prévu de doter l'installation de la pile, telle que décrite ci-dessus, d'un dispositif comprenant, sur le circuit **14,** une vanne **17** contrôlant la branche **15** et une vanne **18** contrôlant la branche **16.**

La vanne **17** peut être à ouverture progressive ou, au contraire, du type tout ou rien en étant dans ce cas du type à section calibrée, éventuellement réglable.

La vanne **17** peut être à commande manuelle ou à ouverture pilotée et, dans un tel cas, il est avantageux de la placer sous la dépendance d'un capteur **19** de la pression de gaz régnant dans le compartiment **3** ou encore d'une minuterie. Le capteur **19** peut être placé en tout point convenable du circuit **14** et, notamment, sur la branche de sortie **16.** Le pilotage d'asservissement est assuré par une ligne **20** et les moyens pour assurer cet asservissement doivent être considérés comme étant à la portée de l'homme de l'art maîtrisant le choix du capteur **19** ainsi que celui de la vanne **17** dont la motorisation peut admettre, comme dit précédemment, une ouverture progressive ou une ouverture tout ou rien.

Le dispositif selon l'invention comprend, par ailleurs, une vanne **23** du type tout ou rien qui est montée pour contrôler la branche d'entrée **12** du circuit **11**.

Enfin, le dispositif selon l'invention comprend un circuit de pontage **24** qui est établi entre la branche **15** et, soit le circuit d'air **11,** par exemple par sa branche **12,** soit le milieu ambiant dans lequel ledit circuit s'ouvre. Lorsque le circuit de pontage **24** est raccordé à la branche **12,** il est avantageux qu'il le soit entre la vanne **23** et l'entrée du compartiment cathode. Le circuit de pontage **24** comporte un moyen **25** de contrôle de circulation formant anti-retour dans le sens circuit **14**-circuit **11**. Un tel moyen **25** peut être un clapet de tout type approprié, soit à ouverture progressive, soit à ouverture tout ou rien, en étant, dans un tel cas, associé à une section de passage calibrée éventuellement réglable.

Par les moyens techniques ci-dessus, le procédé de l'invention peut être mis en service de la façon suivante.

La **figure unique** représente un état statique dans lequel la pile n'est pas en fonctionnement. Le contacteur d'alimentation **9a** du circuit **9** est ainsi ouvert et les vannes **17, 18** et **23** sont fermées.

Il convient de considérer une phase de mise en service de la pile **1,** phase au cours de laquelle il est absolument impératif de supprimer tout risque de création dans le compartiment anode **3** d'un mélange explosif qui résulterait de l'introduction d'hydrogène dans ledit compartiment dont le mélange gazeux qu'il contiendrait incorporerait pour partie de l'oxygène.

L'objet de l'invention est de mettre à profit la présence du catalyseur sur l'électrode **6,** avantageusement choisi pour permettre le fonctionnement correct, même en présence d'humidité et d'eau liquide, pour faire assumer à ce catalyseur une fonction de brûleur catalytique dans les conditions ci-après.
a) Tout d'abord, on procède à l'ouverture de la vanne **18** (sortie) qui peut être du type tout ou rien, puis b) on ouvre alors la vanne **17** (entrée) de manière à assurer une admission progressive d'hydrogène dans le compartiment **3,** afin de créer dans ce dernier une circulation visant à faire passer l'oxygène, éventuellement inclus dans ledit compartiment, sur le catalyseur et créer la réaction de recombinaison conduisant à la formation d'eau éliminée par la branche de sortie **16.**
   De cette manière, il est procédé à une "consommation" d'oxygène pendant une durée prédéterminée, par exemple au moyen d'une minuterie, de telle sorte que le mélange gazeux, occupant ou circulant dans le compartiment **3,** se trouve progressivement constitué de gaz neutre et d'hydrogène.
   On peut aussi conduire cette phase du procédé jusqu'à déterminer une pression de gaz pouvant être comprise entre 0,8 et 1,2 bar.
   La pression du compartiment **3** peut être appréciée par le capteur **19** qui peut commander l'ouverture totale de la vanne **17,** de manière que le circuit **14** fournisse de l'hydrogène délivré à une pression de service pouvant être de l'ordre de 1,5 bar, selon la pression de travail de la pile.
c) Après cette phase préalable de mise en condition du compartiment anode **3,** la vanne **23** peut être ouverte de manière à assurer l'alimentation du compartiment cathode **2** en air, de façon à créer la réaction classique entre les deux compartiments pour donner lieu à la production d'une différence de potentiel entre les bornes **7** et **8** destinées à alimenter, après fermeture du contacteur **9a,** le circuit de charge **9.**

De manière conventionnelle, les conditions de fonctionnement, ainsi que celles d'inertage préalable conduisent à la production de gaz neutres et d'eau, voire d'impuretés qui doivent être éliminées de la branche **16** par les moyens connus de la technique.

Lorsqu'il convient d'arrêter le fonctionnement de la pile à combustible, le procédé d'inertage, toujours dans le même souci d'éviter la formation d'un mélange explosif hydrogène-oxygène, consiste d) à fermer au moins la vanne **17** tout en laissant le contacteur **9a** fermé de manière que la production d'électricité entraîne un prélèvement par le circuit **9** et, par conséquent, une consommation de l'hydrogène présent dans le compartiment anode **3.**

Cette consommation se traduit par une baisse de pression dans le compartiment **3** jusqu'à atteindre une valeur inférieure à la pression atmosphérique qui est celle régnant dans le circuit **11** après arrêt d'alimentation en air ou qui est celle du milieu ambiant dans lequel s'ouvre le circuit de pontage **24.**

Cette différence de pression se traduit par une ouverture du clapet **25,** de sorte qu'une admission progressive d'air est autorisée dans le compartiment **3.**

Cette admission d'air produit la consommation de l'hydrogène résiduelle inclus dans le compartiment **3** par recombinaison avec l'oxygène et formation d'eau dans le compartiment **3** avec éventuellement élimination par la branche **16.**

L'admission progressive de l'air du circuit **11** est placée sous la dépendance de l'ouverture du clapet **25** qui peut être à ouverture progressive prenant en compte la variation de pression dans le compartiment **3** ou à ouverture tout ou rien lorsque la section de passage contrôlée est du type calibré.

De cette manière, le compartiment anode **3** se trouve progressivement occupé par un mélange gazeux neutre, sans qu'il y ait eu risque de formation d'un mélange hydrogène-oxygène explosif. Un tel mélange gazeux est aussi favorable à une remise en service sécuritaire de la pile **1.**

Il doit être considéré que le circuit de pontage **24,** associé au clapet **25,** constitue un moyen de sécurité automatique à même de conduire à l'inertage du compartiment **3** si, pour des raisons quelconques non maîtrisées, la pression d'hydrogène dans ce compartiment et dans le circuit **14** s'abaisse en dessous de la pression atmosphérique.

En outre, il peut être avantageux, selon une autre disposition de l'invention, de prévoir, entre les branches **15** et **16** du circuit **14,** la présence d'une dérivation de recirculation, piquée entre les entrée et sortie du compartiment **3** et les vannes **17** et **18.** La dérivation de recirculation **21** est, préférentiellement, pourvue d'une pompe **22** ou d'un moyen analogue capable d'entretenir une recirculation du milieu gazeux occupant le volume **3** entre la branche de sortie **16** et la branche d'entrée **15** dans le sens de la flèche **f**_{**1**}.

Cette dérivation **21** permet d'assurer un brassage des gaz dans le compartiment **3** et de favoriser l'évacuation de l'oxygène éventuellement présent en phase de démarrage ou la consommation de l'hydrogène résiduel en phase d'arrêt, ainsi que la recombinaison conduisant à la formation d'eau.

L'invention n'est pas limitée aux exemples décrits et représentés, car diverses modifications peuvent y être apportées sans sortir de son cadre.

## Revendications

1. Dispositif de sécurité pour le démarrage d'une pile à combustible **(1)** composée d'au moins un élément comprenant un compartiment anode **(3)** et un compartiment cathode **(2)** raccordés, pour l'anode, à un circuit de circulation d'hydrogène **(14)** et, pour la cathode, à un circuit de circulation d'air **(11),**
le dispositif comprenant :
- deux vannes **(17** et **18)** disposées dans l'entrée **(15)** et la sortie **(16)** du circuit hydrogène du compartiment anode,
- au moins la vanne **(17)** disposée dans l'entrée du circuit hydrogène étant à commande progressive.

2. Dispositif selon la revendication 1, **caractérisé en ce que** la vanne à commande progressive est pilotée par un capteur **(19)** de pression du gaz régnant dans le compartiment hydrogène.

3. Dispositif selon la revendication 1 ou 2, **caractérisé en ce qu'**il comprend, en outre, une dérivation **(21)** de recirculation forcée entre l'entrée et la sortie du circuit hydrogène.

4. Dispositif selon la revendication 3, **caractérisé en ce que** la dérivation **(21)** comporte des moyens **(22)** de mise en circulation forcée du mélange gazeux.

5. Dispositif selon l'une des revendications 1 à 4, **caractérisé en ce qu'**il comprend un circuit de pontage contrôlé **(24)** entre l'entrée **(15)** du circuit hydrogène et, soit le compartiment cathode, soit le milieu ambiant, comportant un moyen de clapet **(25)** sensible à la pression et à ouverture dans le sens prise d'air-circuit d'hydrogène.

6. Dispositif selon la revendication 5, **caractérisé en ce qu'**il comprend une vanne **(23)** du type tout ou rien placée en amont du circuit de pontage sur l'entrée **(12)** du circuit d'air au compartiment cathode.

7. Procédé d'inertage d'une pile à combustible **caractérisé en ce que** pour assurer le démarrage de ladite pile
- on ouvre progressivement le circuit hydrogène du compartiment anode pour faire circuler l'air éventuellement inclus au contact du catalyseur de l'anode et produire la formation d'eau et la constitution d'un mélange gazeux neutre
- on mesure simultanément la pression dudit mélange gazeux et on assure l'ouverture complète du circuit hydrogène après une durée prédéterminée,
- on stabilise ensuite, dans le compartiment anode, la pression nominale d'hydrogène,
- puis on ouvre le circuit d'alimentation en air du compartiment cathode, afin d'établir des conditions de fonctionnement stabilisées.

8. Procédé selon la revendication 7, **caractérisé en ce qu'**on établit la pression du mélange gazeux aux environs de 0,8 bar.

9. Procédé selon la revendication 7 ou 8, **caractérisé en ce qu'**on établit, simultanément à une ouverture progressive du circuit hydrogène, une recirculation du mélange gazeux entre la sortie et l'entrée du compartiment anode.

10. Procédé selon la revendication 9, **caractérisé en ce qu'**on provoque une recirculation du mélange gazeux dans le compartiment anode.
